# EUROPEAN PATENT SPECIFICATION

(11) **EP 4 028 998 B1**
(45) Date of publication and mention of the grant of the patent: **12.06.2024**
(21) Application number: 20780456.8
(22) Date of filing: 10.09.2020
(51) Int. Cl.: G07C 9/00

(54) **BUILDING ACCESS SYSTEM WITH PROGRAMMING DOOR LOCKS**
GEBÄUDEZUGANGSSYSTEM MIT PROGRAMMIERTÜRSCHLÖSSERN
SYSTÈME D'ACCÈS À UN BÂTIMENT AVEC PROGRAMMATION DE SERRURES DE PORTE

(30) Priority: 13.09.2019 US 201962900079 P
(43) Date of publication of application: 20.07.2022
(73) Proprietor: Carrier Corporation, Palm Beach Gardens, FL 33418 (US)
(72) Inventor: KUENZI, Adam, Salem Oregon 97302-1142 (US); SWITZER, Steve, Kennesaw Georgia 30114 (US)
(74) Representative: Dehns
(86) International application number: PCT/US2020/050033
(87) International publication number: WO 2021/050616

(56) References cited:
- WO-A1-01/42598
- US-A- 4 770 012
- US-A- 5 170 431
- US-A- 5 508 691
- US-A1- 2011 074 543
- US-A1- 2019 130 674

## Description

### BACKGROUND

The disclosed embodiments relate to a building management system and more specifically to a building management system with programming door locks.

Construction cards for a hotel in a construction phase may be encoded at a factory. These cards may be identical and shipped all over the globe and provide holders of the cards unrestricted access to a construction site so long as the cards remain active. In an active hotel, when the front desk system goes down, a hotel may be unable to encode cards. Thus, active hotels may need to pre-encode spare cards and keep them in the hotel safe. US2019/0130674 A1 discloses a building complex which may have numerous access control devices to manage access into various aspects of the building including the main entrance, gym, conference rooms, individual apartments, and/or other access-controlled areas. Some of those access control devices may be online (e.g., the main entrance), whereas others may be offline (e.g., the gym). Based on the techniques described herein, the management system may transmit the relevant access control data to one or more access control devices with which the user is known to interact such as the main entrance. When the user subsequently presents his credential to enter the main entrance of the building, that access control device stores the access control data received from the management system to the credential during the brief interaction during which the communication connection is established between the credential and the access control device. As such, the user is immediately able to go to the gym and, when presenting the credential to the access control device associated with the gym, that access control device retrieves the access control data from the user's credential and appropriately configures itself.

### BRIEF SUMMARY

In a first aspect of the present invention there is provided an entry system for a building that includes a plurality of suites, each having a suite lock and a plurality of rooms, each having a room lock, the system comprising: a first door lock that is a suite lock for one of the suites, that includes a controller; wherein the first door lock is configured for encoding access rights to a first client keycard, that is a guest keycard, responsive to a first engagement with a master keycard; wherein engaging the master keycard includes the first door lock monitoring the occurrence of a predetermined combination of actions proximate in time to the first engagement with the master keycard; wherein monitoring the occurrence of the predetermined combination of actions includes the first door lock monitoring the occurrence of one or more additional engagements with the master keycard and receiving manual actuation of a first door handle of the first door lock; wherein the first door lock is configured for granting access rights at a plurality of door locks to the first client keycard, wherein the plurality of door locks includes the first door lock and selective ones of the room locks within the suite, the selective ones of the room locks being less than all of the room locks within the suite.

In addition to one or more of the above disclosed aspects or as an alternate the first door lock is configured for granting the access rights to the first client keycard for a predetermined period of time relative to a time of the first door lock.

In addition to one or more of the above disclosed aspects or as an alternate the first door lock is configured for revoking any active access rights for any other client keycard if and for as long as communications over a network with a network hub are unavailable.

In addition to one or more of the above disclosed aspects or as an alternate responsive to communications over the network with the network hub subsequently becoming available, the first door lock is configured for revoking access rights to the first client keycard.

In addition to one or more of the above disclosed aspects or as an alternate the first door lock is configured for granting access rights at a plurality of door locks to a plurality of client keycards, wherein the plurality of door locks includes the first door lock and the plurality of client keycards includes the first client keycard.

In addition to one or more of the above disclosed aspects or as an alternate the first door lock is configured for granting the access rights based on a system parameter encoded in the master keycard and the first door lock, and a sequence number the first door lock encodes onto the plurality of client keycards.

In addition to one or more of the above disclosed aspects or as an alternate the first door lock is configured for revoking any active access rights for any other client key.

In a second aspect of the present invention there is provided a method of controlling an entry system for a building that includes a plurality of suites, each having a suite lock and a plurality of rooms, each having a room lock, the building comprising: a first door lock that is a suite lock for one of the suites, that includes a controller, the first door lock encoding access rights to a first client keycard, that is a guest keycard, responsive to a first engagement with a master keycard, wherein engaging the master keycard includes the first door lock monitoring the occurrence of a predetermined combination of actions proximate in time to the first engagement with the master keycard; wherein monitoring the occurrence of the predetermined combination of actions includes monitoring the occurrence of one or more additional engagements with the master keycard and receiving manual actuation of a first door handle of the first door lock; wherein the method includes the first door lock granting access rights at a plurality of door locks to the first client keycard, wherein the plurality of door locks includes the first door lock and selective ones of the room locks within the suite, the selective ones of the room locks being less than all of the room locks within the suite.

In addition to one or more of the above disclosed aspects or as an alternate the method includes the first door lock granting the access rights to the first client keycard for a predetermined period of time.

In addition to one or more of the above disclosed aspects or as an alternate the method includes the first door lock revoking any active access rights for any other client key while communications over a network with a network hub are unavailable.

In addition to one or more of the above disclosed aspects or as an alternate the method includes the first door look revoking access rights to the first client keycard responsive to communications over the network with the network hub subsequently becoming available.

In addition to one or more of the above disclosed aspects or as an alternate the method includes the first door lock granting access rights at a plurality of door locks to a plurality of client keycards, wherein the plurality of door locks includes the first door lock and the plurality of client keycards includes the first client keycard.

In addition to one or more of the above disclosed aspects or as an alternate the method includes the first door lock granting the access based on a system parameter encoded in the master keycard and the first door lock, and a sequence number the first door lock encodes onto the plurality of client keycards.

In addition to one or more of the above disclosed aspects or as an alternate the method includes first door lock revoking any active access rights for any other client keycard.

### BRIEF DESCRIPTION OF THE DRAWINGS

The present disclosure is illustrated by way of example and not limited in the accompanying figures in which like reference numerals indicate similar elements.
FIG. 1 is a schematic representation of a building with a building access system which includes features of at least one of the disclosed embodiments;
FIG. 2 is a flowchart showing a method of obtaining access to one or more suites in a building that includes the system of FIG. 1;
FIG. 3 is a schematic representation of another building with a building access system which includes features of at least one of the disclosed embodiments; and
FIG. 4 is a flowchart showing a method of obtaining access to one or more suites in a building that includes the system of FIG. 3.

### DETAILED DESCRIPTION

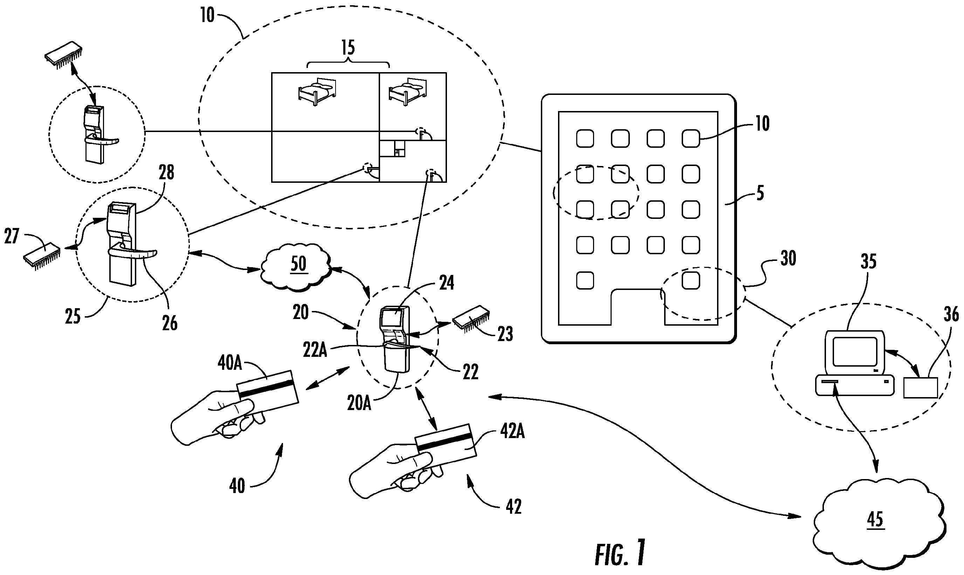

Turning to FIG. 1, according to the claimed invention, a building 5, which may be a hotel, includes a plurality of suites 10 with a plurality of rooms 15 therein. Each of the plurality of suites 10 has one of a plurality of suite locks 20, each with one of a plurality of suite-lock handles 22, suite-lock controllers 23 and suite-lock key card readers 24. Each of the plurality of rooms 15 has one of a plurality of room locks 25, each with one of a plurality of room-lock handles 26, room-lock controllers 27 and room-lock keycard readers 28. A main lobby 30 may include a main hub 35, otherwise referred to as a network hub or front desk, for the hotel. The main hub 35 may be utilized to program access rights to management keycards, otherwise referred to as master keycards 40, and guest keycards, otherwise referred to as client keycards 42. For example the access rights may be used to access one of the suites 10 and a selective ones of the rooms 15 within the one of the suites 10. The main hub 35 may communicate with the plurality of suite locks 20 over a network 45. The suite locks 20 may communicate with the plurality of room locks 25 over a same or different network 50. Each network may be wired or wireless executing any one of known protocols.

There may be occasions where spare version of client key cards 42 are needed to enter a suite. This may occur if a guest loses their client keycards 42. The spare version of the client key cards 42 may be the same as the client key cards 42 or may have fewer access rights as indicated herein. The spare version of client keycards 42 may be needed when a system power outage occurs so that the main hub 35 cannot encode client keycards 42. The main hub 35 may be software on a computer with an attached encoder device 36. The encoder device 36 may be a type associated with encoding keycards. For example the encoder may be an RFID encoder. Typical RFID cards include for example MIFARE, of NXP Semiconductors N.V., and which is based on the ISO/LEC 14443 Type A 13.56 MHz contactless smart card standard.

In addition, during a power outage, the main hub 35 and suite locks 20 may be unable to communicate with one another. During such time, as disclosed herein and according to the claimed invention, upon being provided with one of the master key cards 40, the suite locks 20 is utilized for the programming of the spare version of the client key cards 42. To enter a programming mode, the master key cards 40 is presented to the suite lock 20 with a combination of actions. The combination of actions may include engaging a magnetic strip (which may alternatively be RFID) of one of the master key cards 40 against one of the suite-lock key card readers 24 a predetermined number of times and/or accompanied by engaging a respective one of the suite-lock handles 22. It is to be appreciated that an interior handle or exterior handle may be utilized rather than a suite lock handle.

Additionally the combination of actions may include a privacy knob action as well. For example, the knob action may include a pre-defined sequence that is not 'normal use' but is detectable by the lock as a specific sequence that triggers the programming mode. The knob action may include rotating the door handle a few times. The knob action may also be engaged by rotating the privacy knob (on the inside of the door). In certain utilizations, rotating the privacy knob engages a deadbolt. In certain utilizations the knob functions as an electronic privacy switch that the door lock senses. In such utilizations the door look 20 will prevent client key cards 42 from opening the door lock unless the privacy switch is set to disabled, but may allow the master card 40 to open the door if it has a privacy-override permission on the card. An example set of sequences for the knob action include: unlocking the door and opening the door; while door is open, rotating handle twice; then rotating the privacy knob twice; etc.

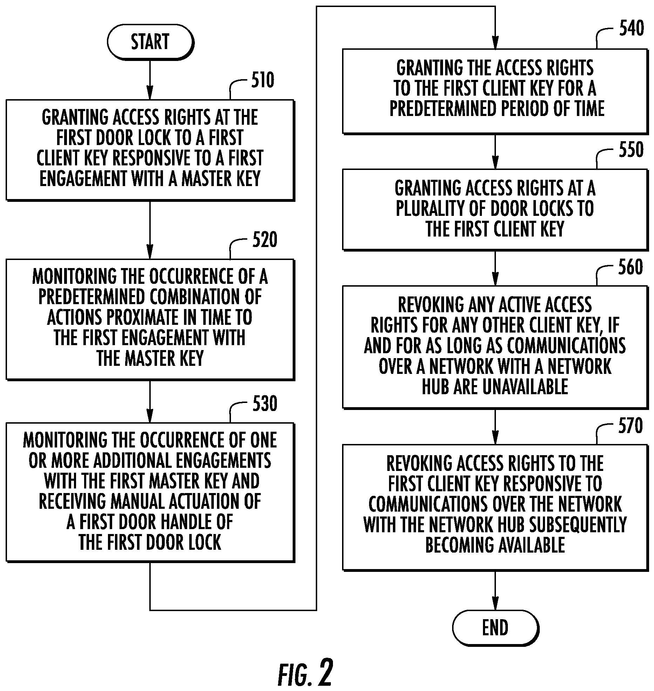

Turning to FIG. 2, a flowchart shows a method of controlling an entry system for the building 5 according to an embodiment. With continued reference to FIGS. 1 and 2, as shown in block 510 the method includes a first door lock 20A, e.g., one of the suite locks 20, granting access rights to a first client key card 42A, that is, a spare version of the client key cards 42. This is executed by the first door lock 20A entering a programming mode to program the first client keycard 42A. For example the first client key card may include a magnetic strip that may be programed by the first door lock 20A and initially may be blank or have no customized data written on the card. The first door lock 20A executes steps under block 510 responsive to a first engagement with a master keycard 40A.

As shown in block 520, the step of engaging the master key card 40A includes the first door lock 20A monitoring the occurrence of a predetermined combination of actions proximate in time to the first engagement with the master key card 40A. As shown in block 530, such monitoring includes the first door lock 20A monitoring the occurrence of one or more additional engagements with the master keycard 40A and receiving manual actuation of a first door handle 22A of the first door lock 20A.

As shown in block 540 the method includes the first door lock 20A granting the access rights to the first client keycard 42A for a predetermined period of time relative to the current time in the lock. For example, the spare version of the guest key card may provide for a two-day access to the suite.

As shown in block 550 the method includes the first door lock 20A granting access rights at a plurality of door locks 160 to the first client key card 42A. For example, a plurality of room locks 25 may be in the suite in addition to the first door lock 20A. The first client keycard 24A may be granted access rights to some of the plurality of room locks 25 in addition to the first door lock 20A. Steps performed under blocks 540 and 550 result in a client keycard 42A being presented to the lock in a blank state and the lock encoding the granted access rights onto the client key card 42A so that it ends in an encoded state.

As shown in block 560 the method includes the first door lock 20A revoking any active access rights that any other client keycard may have to the first door lock 20A. The steps performed under block 560 occur if communications over the network 45 with the main hub 35 are unavailable when programming the spare version of the guest keycard. Further, as illustrated in block 570 the method may include the first door lock 20A revoking access rights to the first client keycard 42A once the network hub becomes available. For example, the method may include revoking the client keycard 42A once another client key card 42 is utilized that was encoded by the main hub after coming back online, etc.

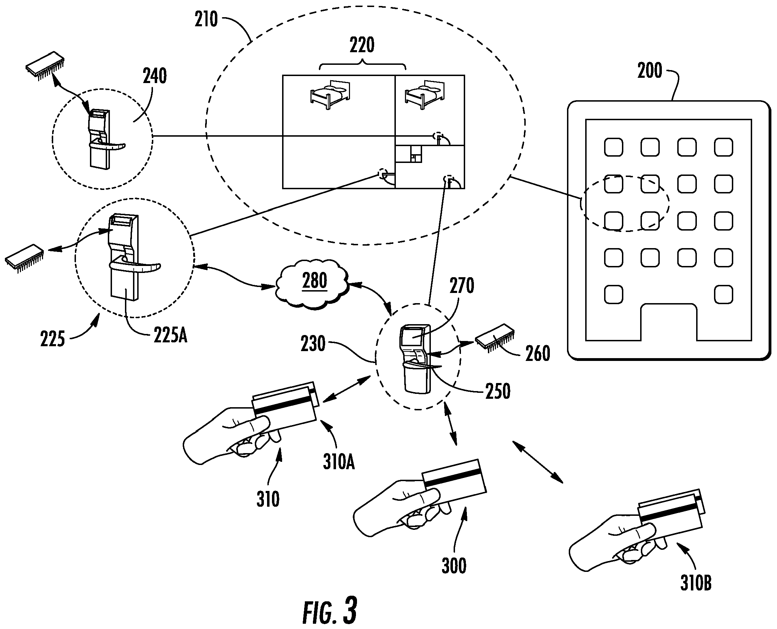

Turning to FIG. 3 a construction site for a building 200 which may be for a hotel may include a plurality of suites 210, each with a plurality of rooms 220. At a certain stage of construction, each of the plurality of suites 210 and rooms 220 may have one of a plurality of door locks 225, including suite locks 230 and room locks 240. The door locks 225 may each be mounted to one of a plurality of mounted doors. Each of the door locks 225 may have one of a plurality of handles 250, controllers 260, and keycard readers 270.

The door locks 225 may communicate with one another over a wired or wireless network 280 executing any one of known protocols. Once the door locks 225 are installed, it may be desirable to control a flow of continued construction, however, the building 200 may not have a main hub 35 that can communicate with the plurality of suite locks 20 over a yet to exist network 45 (referencing figure 1). For example, it may be desirable to allow carpet installers to perform their work and to prevent prior contractors (i.e. electricians or painters) from entering. That is, there maybe be a desired sequence of action for the contractor teams and access is controlled in a flow of continued construction. As disclosed herein the door locks 225 may be utilized for the control of flow of continued construction. In addition, the door locks 225 may be utilized to control the flow between hotels so that contractors may not use their cards 310 to go to another hotel.

The flow control may be obtained by utilizing a master keycard 300. A first plurality of client key cards 310 is distributed to a first contractor team who uses them for a first period of time to accomplish a first task. A second plurality of client key cards 310 is distributed to a second contractor team who uses them for a second period of time to accomplish a second task that is subsequent to the first task.

The first set of client key cards 310A is encoded by action of the door lock 225 upon being presented with the master key card 300. The second set of client key cards 310B is encoded by action of the door lock 225 upon being presented, once again, with the master keycard 300. The master key card 300 may identify the proper sequence for the contractor teams. In practice the first time the master keycard 300 is used, the door locks 225 would start with a default sequence number. When the method 510 is used to encode a first set of a plurality of client keycards 310, this first set would have a higher sequence number. Later when the method is used again, the second set would have an even higher sequence number.

When the master key card 300 is used along with a combination of actions (block 520), the door lock 225 enters a mode for encoding a client keycard 310. This is done by the door lock 225 having the ability to read from and write to (program) a client keycard. When the door lock 225 goes into programming mode it may blink one or more lights (utilizing on-board light emitting diodes) a predetermined sequence or sound (utilizing an on-board speaker) audible tone to indicate that the programming mode is engaged. The door lock 225 may remain in the programming mode for a predetermined time and then return to non-programming (e.g., normal) operation. While in programming-mode the door lock 225 may encode multiple client keycards 310 if presented with such client keycards 310, e.g., which may be blank upon presentation to the door lock.

For example, if in a construction phase, the next two contractor teams may be wall plasters and wall painters, in that order. Thus, the plaster team will be needed at a site before the painter team. The plaster team would receive the first plurality of the client keycards 310A. The painter team would receive the second plurality of the client keycards 310B. The encoded sequence in the master key card 300 would be such that the plaster team has a lower number encoded in the second plurality of client keycards 310A as compared with the painter team.

In use, the general contractor would arrive to meet the plaster team and open one of the door locks 225 with the master keycard 300. The opened one of the door locks 225 enters a programming mode and can program the client keycards at this time with the proper sequence number to provide immediate access to the plaster team. All client keycards encoded with a previous sequence number, if any, are now locked out. After the plaster team is finished, the process is repeated. The general contractor would arrive to meet the painter team and open one of the door locks 225 with the master key card 300. The opened one of the door locks 225 enters a programming mode and can program additional client keycards at this time with the proper next sequence number to provide immediate access to the painter team. All client keycards encoded with a previous sequence number, i.e., for the plaster team, are now locked out. It is to be appreciated that the master card 300 always has access. In addition, rather than sending the different teams client keycards that are not yet programmed, the general contractor may arrive with both the master key card and the requisite number of client key cards for the given team.

In other words, in the disclosed embodiments there is only one master key card 300. This master keycard 300 is used to trigger the door lock to program the first plurality of client keycards 310A and program them from blank to the next sequence number. Later, if the master card 300 is used again, another plurality of client keycards 310B can be encoded with the next sequence number. The master keycard 300 may always open the lock irrespective of the sequence number. The child key cards are controlled by the sequence number and they can be programmed in batches.

That is, a master keycard 300 is identified separately from the client keycards 310. The master keycard 300 is allowed access based on a matching system parameter - i.e. all the locks 225 in a hotel would have the same matching parameter. When the special sequence is done to put a factory lock 225 into programming mode for the first time to make some client keycards 310, the factory lock 225 would read the system parameter from the master keycard 300 and store this in the lock 225. Hereafter this lock 225 will only respond to this master key card 300 and to any client key cards 310 that have this same system parameter. Otherwise the lock will not open for other master keycard 300 that have different system parameters. Once in a programming mode, the very first time, the lock 225 will assume a default sequence number (i.e. 1) and will make client keycards 310 from blank cards. These client key cards 310 will have the system parameter and the sequence of 1. Later, when the special sequence is repeated with the master keycard 300, the lock 225 will advance the sequence number (i.e. to 2) and will make a new set of client keycards 310 from blank cards. This second set will have the same system parameter and the sequence of 2. All along, the master keycard 300 has the system parameter, though not a list of sequence numbers. When the lock has a sequence of 2, it will essentially revoke or prevent access to client key cards 310 that have the sequence of 1. As client key cards 310 that have the sequence of 2 are used on locks that are still at sequence of 1, these locks will advance their sequence numbers to a 2 (since it is greater than 1) and in essence this will revoke all of the client key cards with a lower sequence number on all of the locks once they have been opened.

When a master key card 300 is used, the lock 225 will ignore the sequence number and just compare with the system parameter. That is, the comparison is done by the lock 225 in order to determine that the master keycard 300 is authorized to open the lock 225. When in the factory mode, the lock 225 would accept any master key card 300 and open because there is no established system parameter. But, once the system parameter is established, then only this master key card 300 can open the lock 225. And, once this master key card 300 is used to put the lock into programming mode, then client key cards 310 can be made based on the sequence numbers and these keycards 310 can be obsoleted as the sequence number advances, etc.

As indicated a door lock 225 may utilize method 510 to enter a programming mode and program each of the client key cards 310 to access each of the door locks 225. For example a first door lock 225A may engage the master keycard 300, determine that the access method is performed, and enter a programming mode. While in the programming mode, each of the client key cards 310 may be successively programmed by the first door lock 225A. At this same time, all previously granted access rights for any preceding contacting team is revoked.

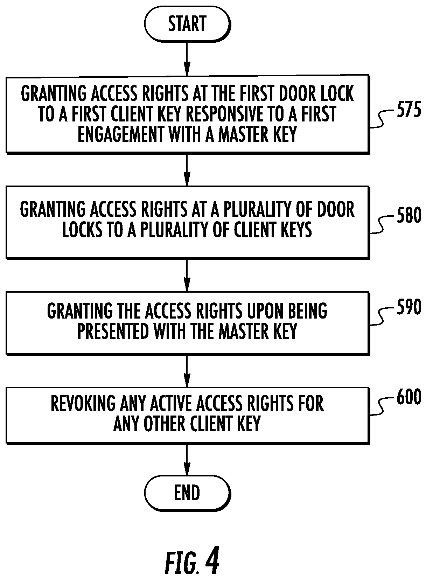

Turning to FIG. 4, a flowchart shows a method of controlling an entry system for the building 200 according to an embodiment. With continued reference to FIGS. 3 and 4, and as illustrated in block 575 the method includes the first door lock 225A granting access rights to a first client keycard 310A by encoding the keycard 310A. The first door lock 225A executes steps under block 575 responsive to a first engagement with the master key card 300 provided in-sequence to any other contracting team and with the method 510.

As shown in block 580 the method includes the first door lock 225A (FIG. 1) granting access rights at a plurality of door locks 225 to a plurality of the client keycards 310. The plurality of door locks 225 includes the first door lock 225A. The plurality of client key cards 310 includes the first client keycard 310A. As indicated and shown in block 590 the method includes the first door lock 225A granting the access rights upon being presented with the master keycard 300. As illustrated in block 600 the method includes first door lock 20A revokes any active access rights for any other client keycard. This action locks out all previous contractor teams.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An entry system for a building that includes a plurality of suites, each having a suite lock and a plurality of rooms, each having a room lock, the system comprising:
a first door lock that is a suite lock for one of the suites, that includes a controller;
wherein the first door lock is configured for encoding access rights to a first client keycard, that is a guest keycard, responsive to a first engagement with a master keycard;
wherein engaging the master keycard includes the first door lock monitoring the occurrence of a predetermined combination of actions proximate in time to the first engagement with the master keycard;
wherein monitoring the occurrence of the predetermined combination of actions includes the first door lock monitoring the occurrence of one or more additional engagements with the master keycard and receiving manual actuation of a first door handle of the first door lock;
wherein the first door lock is configured for granting access rights at a plurality of door locks to the first client keycard, wherein the plurality of door locks includes the first door lock and selective ones of the room locks within the suite, the selective ones of the room locks being less than all of the room locks within the suite.

2. The system of claim 1, wherein the first door lock is configured for granting the access rights to the first client keycard for a predetermined period of time relative to a time of the first door lock.

3. The system of claim 1, wherein the first door lock is configured for revoking any active access rights for any other client keycard if and for as long as communications over a network with a network hub are unavailable.

4. The system of claim 3, wherein responsive to communications over the network with the network hub subsequently becoming available, the first door lock is configured for revoking access rights to the first client keycard.

5. The system of claim 1, wherein the first door lock is configured for granting access rights at a plurality of door locks to a plurality of client keycards, wherein the plurality of door locks includes the first door lock and the plurality of client keycards includes the first client keycard.

6. The system of claim 5, wherein the first door lock is configured for granting the access rights based on a system parameter encoded in the master keycard and the first door lock, and a sequence number the first door lock encodes onto the plurality of client keycards.

7. The system of claim 5, wherein the first door lock is configured for revoking any active access rights for any other client key.

8. A method of controlling an entry system for a building that includes a plurality of suites, each having a suite lock and a plurality of rooms, each having a room lock, the building comprising:
a first door lock that is a suite lock for one of the suites, that includes a controller, the first door lock encoding access rights to a first client keycard, that is a guest keycard, responsive to a first engagement with a master keycard,
wherein engaging the master keycard includes the first door lock monitoring the occurrence of a predetermined combination of actions proximate in time to the first engagement with the master keycard;
wherein monitoring the occurrence of the predetermined combination of actions includes monitoring the occurrence of one or more additional engagements with the master keycard and receiving manual actuation of a first door handle of the first door lock;
wherein the method includes the first door lock granting access rights at a plurality of door locks to the first client keycard, wherein the plurality of door locks includes the first door lock and selective ones of the room locks within the suite, the selective ones of the room locks being less than all of the room locks within the suite.

9. The method of claim 8, wherein the method includes the first door lock granting the access rights to the first client keycard for a predetermined period of time.

10. The method of claim 8, wherein the method includes the first door lock revoking any active access rights for any other client key while communications over a network with a network hub are unavailable.

11. The method of claim 10, wherein the method includes the first door look revoking access rights to the first client key card responsive to communications over the network with the network hub subsequently becoming available.

12. The method of claim 8, wherein the method includes the first door lock granting access rights at a plurality of door locks to a plurality of client keycards, wherein the plurality of door locks includes the first door lock and the plurality of client keycards includes the first client keycard.

13. The method of claim 12, wherein the method includes the first door lock granting the access rights based on a system parameter encoded in the master keycard and the first door lock, and a sequence number the first door lock encodes onto the plurality of client keycards.

14. The method of claim 12, wherein the method includes first door lock revoking any active access rights for any other client keycard.

## Patentansprüche

1. Eintrittssystem für ein Gebäude, das eine Vielzahl von Suiten beinhaltet, die jeweils ein Suitenschloss und eine Vielzahl von Räumen aufweisen, die jeweils ein Raumschloss aufweisen, wobei das System Folgendes umfasst:
ein erstes Türschloss, das ein Suitenschloss für eine der Suiten ist, das eine Steuerung beinhaltet;
wobei das erste Türschloss zum Codieren von Zugangsrechten auf eine erste Client-Schlüsselkarte, die eine Gast-Schlüsselkarte ist, als Reaktion auf eine erste Kupplung mit einer Master-Schlüsselkarte konfiguriert ist;
wobei das Kuppeln der Master-Schlüsselkarte beinhaltet, dass das erste Türschloss das Auftreten einer vorbestimmten Kombination von Handlungen überwacht, die zeitlich nahe an der ersten Kupplung mit der Master-Schlüsselkarte liegen;
wobei das Überwachen des Auftretens der vorbestimmten Kombination von Handlungen ein Überwachen des Auftretens von einem oder mehreren zusätzlichen Kupplungen mit der Master-Schlüsselkarte und ein Empfangen einer manuellen Betätigung eines ersten Türgriffs des ersten Türschlosses durch das erste Schloss beinhaltet;
wobei das erste Türschloss zum Gewähren von Zugangsrechten an einer Vielzahl von Türschlössern für die erste Client-Schlüsselkarte konfiguriert ist, wobei die Vielzahl von Türschlössern das erste Türschloss und ausgewählte der Raumschlösser innerhalb der Suite beinhaltet, wobei die ausgewählten der Raumschlösser weniger als alle der Raumschlösser innerhalb der Suite sind.

2. System nach Anspruch 1, wobei das erste Türschloss zum Gewähren der Zugangsrechte für die erste Client-Schlüsselkarte für einen vorbestimmten Zeitraum relativ zu einer Zeit des ersten Türschlosses gewährt.

3. System nach Anspruch 1, wobei das erste Türschloss zum Widerrufen jeglicher aktiver Zugangsrechte für jegliche andere Client-Schlüsselkarte konfiguriert ist, wenn und solange eine Kommunikation über ein Netzwerk mit einem Netzwerk-Hub nicht verfügbar ist.

4. System nach Anspruch 3, wobei das erste Türschloss zum Widerrufen von Zugangsrechten für die erste Client-Schlüsselkarte als Reaktion darauf, dass anschließend eine Kommunikation über das Netzwerk mit dem Netzwerk-Hub verfügbar wird, konfiguriert ist.

5. System nach Anspruch 1, wobei das erste Türschloss zum Gewähren von Zugangsrechten an einer Vielzahl von Türschlössern für eine Vielzahl von Client-Schlüsselkarten konfiguriert ist, wobei die Vielzahl von Türschlössern das erste Türschloss beinhaltet und die Vielzahl von Client-Schlüsselkarten die erste Client-Schlüsselkarte beinhaltet.

6. System nach Anspruch 5, wobei das erste Türschloss zum Gewähren der Zugangsrechte basierend auf einem Systemparameter, der in der Master-Schlüsselkarte und dem ersten Türschloss codiert ist, und einer Sequenznummer, die das erste Türschloss auf die Vielzahl von Client-Schlüsselkarten codiert, konfiguriert ist.

7. System nach Anspruch 5, wobei das erste Türschloss zum Widerrufen jeglicher aktiver Zugangsrechte für jeglichen anderen Client-Schlüssel konfiguriert ist.

8. Verfahren zum Steuern eines Eintrittssystems für ein Gebäude, das eine Vielzahl von Suiten beinhaltet, die jeweils ein Suitenschloss und eine Vielzahl von Räumen aufweisen, die jeweils ein Raumschloss aufweisen, wobei das Gebäude Folgendes umfasst:
ein erstes Türschloss, das ein Suitenschloss für eine der Suiten ist, das eine Steuerung beinhaltet, wobei das erste Türschloss Zugangsrechte auf eine erste Client-Schlüsselkarte, die eine Gast-Schlüsselkarte ist, als Reaktion auf eine erste Kupplung mit einer Master-Schlüsselkarte codiert;
wobei das Kuppeln der Master-Schlüsselkarte beinhaltet, dass das erste Türschloss das Auftreten einer vorbestimmten Kombination von Handlungen überwacht, die zeitlich nahe an der ersten Kupplung mit der Master-Schlüsselkarte liegen;
wobei das Überwachen des Auftretens der vorbestimmten Kombination von Handlungen ein Überwachen des Auftretens von einem oder mehreren zusätzlichen Kupplungen mit der Master-Schlüsselkarte und ein Empfangen einer manuellen Betätigung eines ersten Türgriffs des ersten Türschlosses beinhaltet;
wobei das Verfahren Gewähren von Zugangsrechten an einer Vielzahl von Türschlössern für die erste Client-Schlüsselkarte durch das erste Türschloss beinhaltet, wobei die Vielzahl von Türschlössern das erste Türschloss und ausgewählte der Raumschlösser innerhalb der Suite beinhaltet, wobei die ausgewählten der Raumschlösser weniger als alle der Raumschlösser innerhalb der Suite sind.

9. Verfahren nach Anspruch 8, wobei das Verfahren Gewähren der Zugangsrechte für die erste Client-Schlüsselkarte durch das erste Türschloss für einen vorbestimmten Zeitraum beinhaltet.

10. Verfahren nach Anspruch 8, wobei das Verfahren Widerrufen jeglicher aktiver Zugangsrechte für jeglichen anderen Client-Schlüssel durch das erste Türschloss beinhaltet, während eine Kommunikation über ein Netzwerk mit einem Netzwerk-Hub nicht verfügbar ist.

11. Verfahren nach Anspruch 10, wobei das Verfahren Widerrufen von Zugangsrechten für die erste Client-Schlüsselkarte durch das erste Türschloss als Reaktion darauf beinhaltet, dass anschließend eine Kommunikation über das Netzwerk mit dem Netzwerk-Hub verfügbar wird.

12. Verfahren nach Anspruch 8, wobei das Verfahren Gewähren von Zugangsrechten an einer Vielzahl von Türschlössern für eine Vielzahl von Client-Schlüsselkarten durch das erste Türschloss beinhaltet, wobei die Vielzahl von Türschlössern das erste Türschloss beinhaltet und die Vielzahl von Client-Schlüsselkarten die erste Client-Schlüsselkarte beinhaltet.

13. Verfahren nach Anspruch 12, wobei das Verfahren Gewähren der Zugangsrechte durch das erste Türschloss basierend auf einem Systemparameter, der in der Master-Schlüsselkarte und dem ersten Türschloss codiert ist, und einer Sequenznummer, die das erste Türschloss auf die Vielzahl von Client-Schlüsselkarten codiert, beinhaltet.

14. Verfahren nach Anspruch 12, wobei das Verfahren Widerrufen jeglicher aktiver Zugangsrechte für jegliche andere Client-Schlüsselkarte durch das erste Türschloss beinhaltet.

## Revendications

1. Système d'entrée pour un bâtiment qui comprend une pluralité d'appartements, ayant chacun une serrure d'appartement et une pluralité de pièces, ayant chacune une serrure de pièce, le système comprenant :
une première serrure de porte qui est une serrure d'appartement pour l'un des appartements, qui comprend un dispositif de commande ;
dans lequel la première serrure de porte est configurée pour coder les droits d'accès à une première carte-clé client, c'est-à-dire une carte-clé invité, en réponse à une première mise en prise avec une carte-clé principale ;
dans lequel la mise en prise de la carte-clé principale comprend la première serrure de porte surveillant l'apparition d'une combinaison prédéterminée d'actions à proximité dans le temps de la première mise en prise avec la carte-clé principale ;
dans lequel la surveillance de l'apparition de la combinaison prédéterminée d'actions comprend la surveillance par la première serrure de porte de l'apparition d'une ou de plusieurs mises en prise supplémentaires avec la carte-clé principale et la réception d'un actionnement manuel d'une première poignée de porte de la première serrure de porte ;
dans lequel la première serrure de porte est configurée pour accorder des droits d'accès au niveau d'une pluralité de serrures de porte à la première carte-clé client, dans lequel la pluralité de serrures de porte comprend la première serrure de porte et les serrures sélectives parmi les serrures de pièce au sein de l'appartement, les serrures sélectives des serrures de pièces étant inférieures à toutes les serrures de pièces au sein de l'appartement.

2. Système selon la revendication 1, dans lequel la première serrure de porte est configurée pour accorder les droits d'accès à la première carte-clé client pendant une période de temps prédéterminée par rapport à une heure de la première serrure de porte.

3. Système selon la revendication 1, dans lequel la première serrure de porte est configurée pour révoquer tout droit d'accès actif pour toute autre carte-clé client si et aussi longtemps que les communications sur un réseau avec une plateforme réseau ne sont pas disponibles.

4. Système selon la revendication 3, dans lequel, en réponse aux communications sur le réseau avec la plateforme réseau devenant ensuite disponible, la première serrure de porte est configurée pour révoquer les droits d'accès à la première carte-clé client.

5. Système selon la revendication 1, dans lequel la première serrure de porte est configurée pour accorder des droits d'accès au niveau d'une pluralité de serrures de porte à une pluralité de cartes-clés client, dans lequel la pluralité de serrures de porte comprend la première serrure de porte et la pluralité de cartes-clés client comprend la première carte-clé client.

6. Système selon la revendication 5, dans lequel la première serrure de porte est configurée pour accorder les droits d'accès sur la base d'un paramètre système codé dans la carte-clé principale et la première serrure de porte, et un numéro de séquence que la première serrure de porte code sur la pluralité de cartes-clés client.

7. Système selon la revendication 5, dans lequel le premier verrou de porte est configuré pour révoquer tout droit d'accès actif pour toute autre clé client.

8. Procédé de commande d'un système d'entrée pour un bâtiment qui comprend une pluralité d'appartements, ayant chacun une serrure d'appartement et une pluralité de pièces, ayant chacune une serrure de pièce, le bâtiment comprenant :
une première serrure de porte qui est une serrure d'appartement pour l'un des appartements, qui comprend un dispositif de commande, la première serrure de porte codant des droits d'accès à une première carte-clé client, c'est-à-dire une carte-clé invité, en réponse à une première mise en prise avec une carte-clé principale,
dans lequel la mise en prise de la carte-clé principale comprend la première serrure de porte surveillant l'apparition d'une combinaison prédéterminée d'actions à proximité dans le temps de la première mise en prise avec la carte-clé principale ;
dans lequel la surveillance de l'apparition de la combinaison prédéterminée d'actions comprend la surveillance de l'apparition d'une ou de plusieurs mises en prise supplémentaires avec la carte-clé principale et la réception d'un actionnement manuel d'une première poignée de porte de la première serrure de porte ;
dans lequel le procédé comprend la première serrure de porte accordant des droits d'accès au niveau d'une pluralité de serrures de porte à la première carte-clé client, dans lequel la pluralité de serrures de porte comprend la première serrure de porte et les serrures sélectives parmi les serrures de pièce au sein de l'appartement, les serrures sélectives des serrures de pièces étant inférieures à toutes les serrures de pièces au sein de l'appartement.

9. Procédé selon la revendication 8, dans lequel le procédé comprend la première serrure de porte accordant les droits d'accès à la première carte-clé client pendant une période de temps prédéterminée.

10. Procédé selon la revendication 8, dans lequel le procédé comprend la première serrure de porte révoquant tout droit d'accès actif pour toute autre clé client alors que les communications sur un réseau avec une plateforme réseau ne sont pas disponibles.

11. Procédé selon la revendication 10, dans lequel le procédé comprend la première serrure de porte révoquant les droits d'accès à la première carte-clé client en réponse aux communications sur le réseau, la plateforme réseau devenant ensuite disponible.

12. Procédé selon la revendication 8, dans lequel le procédé comprend la première serrure de porte accordant des droits d'accès au niveau d'une pluralité de serrures de porte à une pluralité de cartes-clés client, dans lequel la pluralité de serrures de porte comprend la première serrure de porte et la pluralité de cartes-clés client comprend la première carte-clé client.

13. Procédé selon la revendication 12, dans lequel le procédé comprend la première serrure de porte accordant les droits d'accès sur la base d'un paramètre système codé dans la carte-clé principale et la première serrure de porte, et un numéro de séquence que la première serrure de porte code sur la pluralité de cartes-clés client.

14. Procédé selon la revendication 12, dans lequel le procédé comprend une première serrure de porte révoquant tout droit d'accès actif pour toute autre carte-clé client.
